# EUROPEAN PATENT APPLICATION

(11) **EP 1 335 074 A1**
(43) Date of publication of application: **13.08.2003**
(21) Application number: 03002740.3
(22) Date of filing: 06.02.2003
(51) Int. Cl.: E02F 9/20

(54) **Control apparatus for the arm of a working machine in form of a kinematically similar reduced scale lever assembly**

(30) Priority: 08.02.2002 GB 0202918
(71) Applicant: J.C. BAMFORD EXCAVATORS LIMITED, Uttoxeter Staffordshire ST14 5JP (GB)
(72) Inventor: Hodgson, Paul Warmingham, Marchington, Staffordshire ST14 8LY (GB)
(74) Representative: Lucking, David John

(57) **Abstract**

A control apparatus for controlling the working arm (15) of a machine (10), the arm (15) including a plurality of relatively pivotal arm members (16,20), a first (16) of the arm members, towards one end thereof, being pivotal, relative to a body (11) of the machine (10) about a first generally horizontal axis (A) by actuator means (18), and relative to the body (11) of the machine (10) about a generally upright axis (B) by actuator means (19a,19b), and towards the other end of the first arm member (16), the first arm member (16) being pivoted to the second arm member (20) towards one end of the second arm member (20) about a second generally horizontal axis (C) with actuator means (22) between the first and second arm members (16,20) to effect relative pivoting, the control apparatus including a base (31), a first control link (32) pivoted towards one end thereof to the base (31) at a first joint (33) which permits pivoting movement of the first link (32) about a first generally horizontal axis (A'), and the first link (32) being pivotal relative to the base (31) about a generally upright axis (B'), and pivoting movement towards a second end thereof to a second control link (36) at a second joint (37) for movement about a second generally horizontal axis (C') whereby the geometry of the control apparatus mimics the geometry of the working arm (15) to be controlled.

## Description

### Description of Invention

This invention relates to a control apparatus and more particularly to a control apparatus for controlling a working arm of a machine such as for example only an excavating machine, in which the working arm includes a plurality of relatively pivotal arm members with there being a working implement carried by the arm for performing excavating or the like tasks.

Typically the arm members are relatively moveable and the arm is movable relative to a body of the machine and the working implement is movable on the arm, by actuators, such as hydraulic actuators. Pressurised hydraulic fluid for the actuators is controlled by control valves which conventionally are operated by respective control levers. Particularly in a machine in which the working arm is of a complex geometry, several control levers are required for controlling the individual actuators, making the controlling of the working arm a task requiring much skill and practice. It has also been proposed to utilise servo controls, for example being multi-directionally moveable joysticks, mounted in arm rests of an operator's seat. These too though, require considerable skill and training to master.

It has been proposed in for example, US5995893 to provide an alternative control apparatus in which complex working arm movements can be controlled by manual operation of a control arm which includes relatively movable links, link movements being sensed to provide inputs to a controller which provides control signals to the control valves. Thus movements of links of the control arm are translated by into actuator movements of the working arm.

However the geometry of the control arm is distinct from the geometry of the working arm of the machine and thus again, the control apparatus requires considerable skill and practice to master.

According to one aspect of the invention we provide a control apparatus for controlling a working arm of a machine, the arm including a plurality of relatively pivotal arm members, a first of the arm members, towards one end thereof, being pivotal, relative to a body of the machine about a first generally horizontal axis by actuator means, and relative to the body of the machine about a generally upright axis by actuator means, and towards the other end of the first arm member, the first arm member being pivoted to the second arm member towards one end of the second arm member about a second generally horizontal axis with actuator means between the first and second arm members to effect relative pivoting, the control apparatus including a base, a first control link pivoted towards one end thereof to the base at a first joint which permits pivoting movement of the first link about a first generally horizontal axis, and pivoting movement relative to the base about a generally upright axis, and the first control link being pivoted towards a second end thereof to a second control link at a second joint for movement about a second generally horizontal axis whereby the geometry of the control apparatus mimics the geometry of the working arm to be controlled, and the second control link including a manually graspable part towards a second end thereof whereby the control links may be manually moved relative to each other and to the base about the first and second generally horizontal axes and about the upright axis, and each of the first and second joints including respective sensing means to sense movement of the first control link relative to the base at the first joint, and relative movement of the first and second control links at the second joint, and to sense pivotal movement of the first control link relative to the base about the generally upright axis, the sensing means providing respective inputs to a controller which operates the respective actuator means to pivot the arm members of the working arm relative to each other and to the body of the machine, in response to and corresponding to control link movements.

Towards the outermost end of the second working arm member is provided a working implement such as a bucket, which is movable relative to the second arm member about a third generally horizontal axis by actuator means. The manually graspable part of the control apparatus includes a movable control member with there being sensing means to sense control member movements, to provide a further input to the controller which operates actuator means in response to and corresponding to control member movements.

To facilitate control apparatus operation, the base is mounted on or is part of an operator's seat. The base is mounted on or is part of an arm rest of the operator's seat with the first joint being positioned towards a back of the seat with the control links extending forwardly, so that control link movements may be effected by operator forearm and/or wrist movements, preferably with the operator's elbow resting on the armrest.

Thus the invention provides a control apparatus which is a truer analogue of the working arm of the machine to be controlled than previously proposed arrangements. The invention has particularly been devised for controlling a working arm of complex geometry.

The movable control member on the manually graspable part of the apparatus, may be operable by an operator's finger or hand.

In typical operation, the first arm member of the working arm will extend upwardly and outwardly of its pivotal connection to the body of the machine, and the second working arm member will extend downwardly from the first end thereof towards the ground. The first control link preferably mimics this geometry by extending upwardly from the first joint, and the second control link extends downwardly from the second joint, so that the second joint is above the base, and the manually graspable part.

According to a second aspect of the invention we provide a control apparatus for controlling a working arm of a machine, the arm including a plurality of relatively pivotal arm members, a first of the arm members, towards one end thereof, being pivotal, relative to a body of the machine about a first generally horizontal axis by actuator means, and towards the other end of the first arm member, the first arm member being pivoted to the second arm member towards one end of the second arm member about a second generally horizontal axis with actuator means between the first and second arm members to effect relative pivoting, the control apparatus including a base, a first control link pivoted towards one end thereof to the base at a first joint which permits pivoting movement of the first link about a first generally horizontal axis, and the first control link being pivoted towards a second end thereof to a second control link at a second joint for movement about a second generally horizontal axis, and the second control link including a manually graspable part towards a second end thereof whereby the control links may be manually moved relative to each other and to the base about the first and second generally horizontal axes, and each of the first and second joints including respective sensing means to sense movement of the first control link relative to the base at the first joint and relative movement of the first and second control links at the second joint the sensing means providing respective inputs to a controller which operates the respective actuator means to pivot the arm members of the working arm relative to each other and to the body of the machine, in response to and corresponding to control link movements, the first control link extending upwardly from the first joint, and the second control link extending downwardly from the second joint, so that the second joint is above the base and the manually graspable part whereby the geometry of the control apparatus mimics the geometry of the working arm to be controlled, wherein towards the outermost end of the second working arm member a working implement is provided which is movable relative to the second arm member about a third generally horizontal axis by actuator means, and the manually graspable part of the control apparatus includes a rotatable control member with there being sensing means to sense control member movements to provide a further input to the controller which operates the actuator means in response to and corresponding to control member movements, and the base is mounted in or is part of an arm rest of an operator's seat with the first joint being positioned towards a back of the seat with the control links extending forwardly, so that control link movements may be effected by operator forearm and/or wrist movements.

The control apparatus of the second aspect of the invention may include any of the features of the control apparatus of the first aspect of the invention.

In the control apparatus of the first or second aspects of the invention, the actuator means are preferably fluid operated via control valves, the controller including a processing means which, from the inputs from the sensing means, provides control signals to the control valves to achieve actuator operation which results in working arm movements corresponding to manual movements of the control apparatus links and control member where provided.

If desired the joints of the control apparatus may include restraining means to restrain the amount of pivotal movement permitted, corresponding to restrictions to pivotal movement imposed on the arm members of the working arm due to the geometry of the working arm, but preferably the joints of the control apparatus permit of generally free movement with feedback to the control apparatus being by operator eye-to-hand co-ordination.

According to a third aspect of the invention we provide a machine having a working arm including a plurality of relatively pivotal arm members, a first of the arm members, towards one end thereof, being pivotal, relative to a body of the machine about a first generally horizontal axis by actuator means and towards the other end of the first arm member, the first arm member being pivoted to the second arm member towards one end of the second arm member about a second generally horizontal axis with actuator means between the first and second arm members to effect relative pivoting, the outermost end of the second arm member being provided with a working implement which is movable relative to the second arm member about a third generally horizontal axis by actuator means, and the machine including a control apparatus including a base, the base being mounted on or part of an arm rest of an operator's seat, a first control link pivoted towards one end thereof to the base at a first joint which permits pivoting movement of the first link about a first generally horizontal axis, and pivoting movement relative to the base about a generally upright axis, and the first control link being pivoted towards a second end thereof to a second control link at a second pivotal joint for movement about a second generally horizontal axis, the first joint being positioned towards a back of the seat with the control links extending forwardly, whereby the geometry of the control apparatus mimics the geometry of the working arm to be controlled, and the second control link including a manually graspable part towards a second end thereof whereby the control links may be manually moved relative to each other and to the base about the first and second generally horizontal axes and about the upright axis, the manually sensing means to sense movement of the first control link relative to the base at the first joint, and relative movement of the first and second control links at the second joint, and to sense pivotal movement of the first control link relative to the base about the generally upright axis, and there being sensing means to sense control member movements, the sensing means providing respective inputs to a controller which operates the respective actuator means to pivot the arm members and the working implement of the working arm relative to each other and to the body of the machine, in response to and corresponding to control link movements.

According to a fourth aspect of the invention we provide a machine having a working arm, the arm including a plurality of relatively pivotal arm members, a first of the arm members, towards one end thereof, being pivotal, relative to a body of the machine about a first generally horizontal axis by actuator means, and towards the other end of the first arm member, the first arm member being pivoted to the second arm member towards one end of the second arm member about a second generally horizontal axis with actuator means between the first and second arm members to effect relative pivoting the outermost end of the second arm member being provided with a working implement which is movable relative to the second arm member about a third generally horizontal axis by actuator means, and the machine including a control apparatus including a base, the base being mounted on or part of an arm rest of an operator's seat, a first control link pivoted towards one end thereof to the base at a first joint which permits pivoting movement of the first link about a first generally horizontal axis, and the first control link being pivoted towards a second end thereof to a second control link at a second joint for movement about a second generally horizontal axis, the first joint being positioned towards a back of the seat with the control links extending forwardly, and the second control link including a manually graspable part towards a second end thereof whereby the control links may be manually moved relative to each other and to the base about the first and second generally horizontal axes, the manually graspable part of the control apparatus including a rotatable control member, and each of the first and second joints including respective sensing means to sense movement of the first control link relative to the base at the first joint, and relative movement of the first and second control links at the second joint, and there being sensing means to sense control member movements, the sensing means providing respective inputs to a controller which operates the first, second, third and fourth actuator means to pivot the arm members and the working implement of the working arm relative to each other and to the body of the machine, in response to and corresponding to control link movements, the first control link extending upwardly from the first joint, and the second control link extending downwardly from the second joint, so that the second joint is above the base and the manually graspable part whereby the geometry of the control apparatus mimics the geometry of the working arm to be controlled.

Embodiments of the invention will now be described with reference to the accompanying drawings in which:-
FIGURE 1 is an illustrative side view of an excavating machine having a working arm which may be controlled by a control apparatus in accordance with the invention;
FIGURE 2 is an illustrative perspective view of part of a control apparatus in accordance with the invention;
FIGURE 3 is an illustrative view of a control apparatus in accordance with the invention, for and actuators of the working arm shown in figure 1.

Referring to the drawings there is shown an excavating machine 10 which includes a body 11 which has an operator's cab 12 in which an operator 13 may sit on an operator's seat 14 to control operations of a working arm 15 of the machine 10.

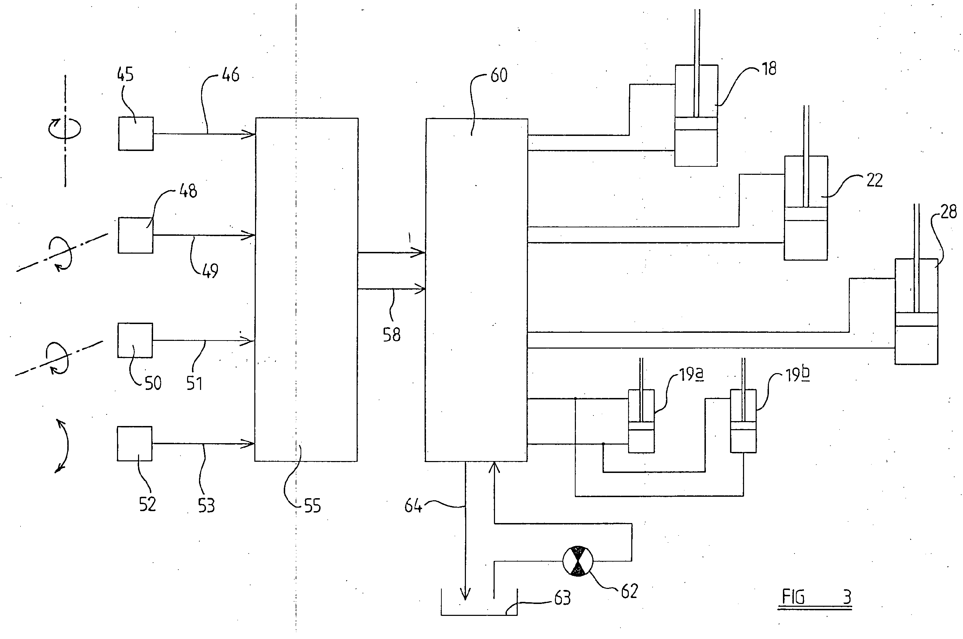

The working arm is of the kind which includes a first arm member 16, known as a boom, which is mounted on the body 11 towards a first end of the boom 16, for movement relative to the body 11 about a first generally horizontal axis A, and about an upright axis B. A first actuator 18, which in the present example is a linear double acting hydraulic actuator, acts to raise and lower the boom 16 about axis A, and a pair of "push-pull" actuators 19a, 19b (shown in figure 3) act to move the boom 15 about the upright axis B.

The boom 15 extends upwardly from the pivot connection at axis A, outwardly of the body 11 of the machine 10, although during excavating operations, the boom 16 may extend downwardly an amount restricted by the permitted extension of the first actuator 18.

The arm 15 further includes a second arm member 20, known as a dipper arm, which is pivotally connected at a first end of the dipper arm 20 to a second end of the boom 16, for pivotal movement about a second generally horizontal axis C. Relative pivotal movement between the boom 16 and dipper arm 20 is achieved by a further linear double acting hydraulic actuator 22, which is secured to each of the boom 16 and dipper arm 20. Typically the dipper arm 20 extends downwardly from the first end pivotal connection to the boom 16 towards a second outermost end.

Towards the second outermost end of the dipper arm 20, there is provided a working implement which in this example is an excavating bucket 25, the bucket 25 which is pivoted to the dipper arm 20 for movement about a third generally horizontal axis D, such movement being effected by a further linear double acting actuator 28, and associated linkage apparatus 29, which acts between the bucket 25 and the dipper arm 20.

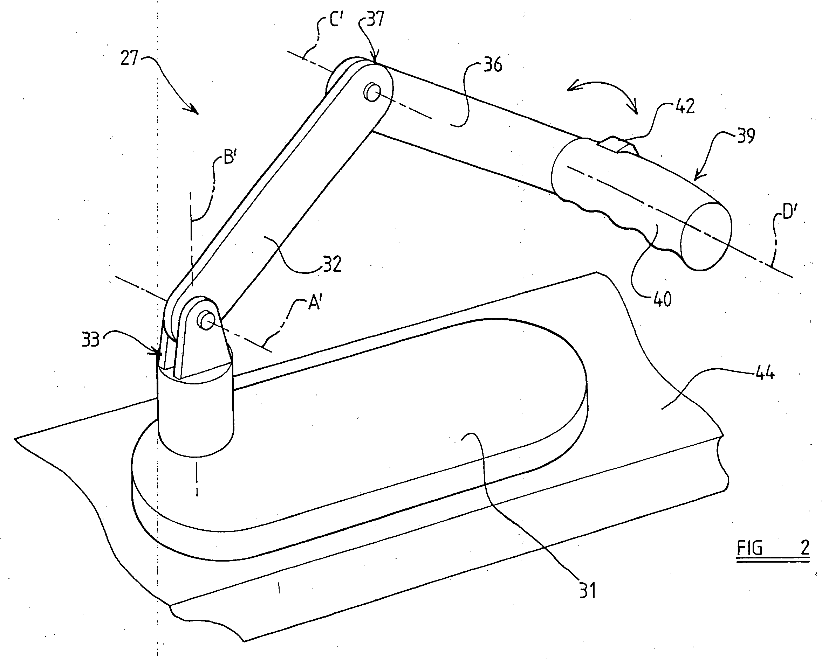

Referring to figures 2 and 3 there is shown a control apparatus 30 which includes a control link assembly 27 having a base 31 which has a first control link 32 pivotally connected thereto at a first joint 33 which permits movement of the first control link 32 relative to the base 31 about an upright axis B' and about a generally horizontal axis A'. Like the boom 16 of the working arm 15 of the machine 10, the first control link 32 extends upwardly, from the joint 33. The first link 32 is pivotally connected to a second control link 36 at a second joint 37 for movement about generally horizontal axis C', and like the dipper arm 20 of the working arm 15 of the machine 10, the second control link 36 extends downwardly, from the second joint 37.

Towards an outermost end of the second control link 36, there is provided a manually graspable part 39, which in this example includes a handle 40 which extends generally at right angles to the second control link 36. The handle 40 may be shaped as shown, to receive an operator's fingers around the handle 40.

Thus the geometry of the control links 32, 36 closely mimics the geometry of the working arm 15, the second joint 37, at least usually, being above the first joint 33 and the manually graspable part 39.

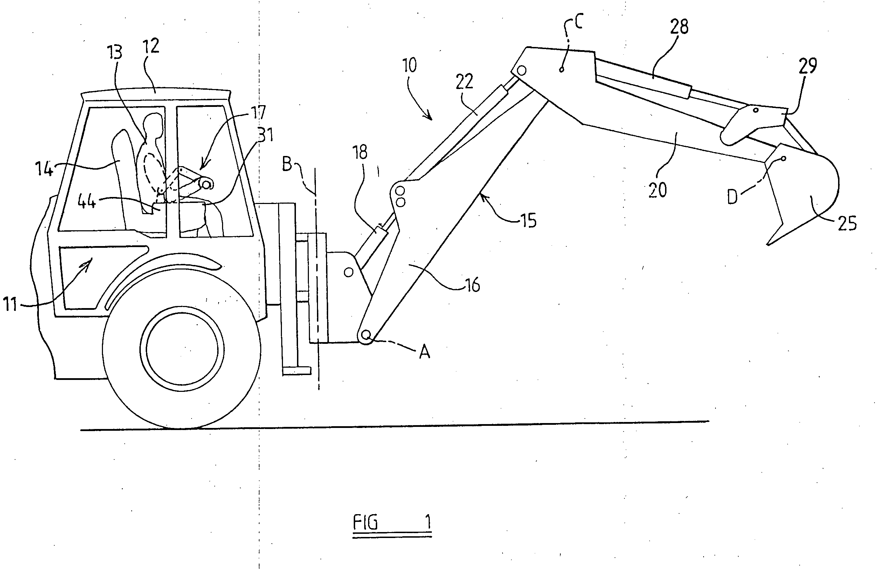

The manually graspable part 39 includes a control member 42 which may be moved up and down by an operator's hand. Such movement may be rotational or sliding, but in this example, is rotational about a third generally horizontal axis D' which in this example extends generally at right angles to the second control link 36 along a longitudinal axis of the manually graspable part 39, as illustrated in Figure 2. Thus, an operator may grasp the manually graspable part 39 with his hand as illustrated in Figure 1, and may use wrist movement to rotate the control member 42 about axis D'.

The control member 42 may be integral with the handle 40 such that rotation of the entire handle 40 about axis D' is necessary to achieve rotation of the control member 42. Alternatively, the control member 42 may be separate from handle 40, such that rotation of the control member 42 about axis D' relative to the handle 40 is permitted.

At the first joint 33 there are provided sensing means in the form of encoders to sense relative rotation of the first control link 32 about the axes A' and B'. Preferably a pair of such encoders or other sensing means are provided, a first sensing means 45 to sense movement of the first control link 32 about axis A' and to provide an input 46 to a controller 55, which input may include information relating not only to the extent and direction of movement of the first control link 32, but the velocity of movement too, and a second sensing means 48 to sense movement of the first control link 32 about axis B' and to provide an input 49 to the controller 55, which may again include information relating not only to the extent and direction of movement of the first control link 32, but the velocity of movement too.

At the second joint 37 a further sensing means 50 is provided to sense relative movements between the first and second control links 32, 36 about axis C', and to provide an input 51 to the controller 55 and again the input 51 may include information relating not only to the extent and direction of relative movement of the first and second control links 20, 32, but the velocity of movement too.

Rotation of the control member 42 of the handle 40 about axis D' is sensed by yet another sensing means 52 which provides an input 53 to the controller 55.

Thus an operator 13 may move the control links 32, 36 and the control member 42 of the assembly 27 in the same way that the working arm 15 and bucket 25 may move. If desired, each joint 33 and 37 may only allow restricted movement of the control links 20, 32 corresponding to movements of the working arm 15 and the bucket 25 which are restricted due to the geometry of the working arm 15 etc.

Thus the operator 13 is prevented from moving the control links 32, 36 and the control member 42 in a manner in which the working arm 15 and bucket 25 cannot move due to their geometries.

Preferably though the joints 33 and 37 permit of generally free pivoting movement, with feedback being via operator eye-to-hand co-ordination.

The controller 55 preferably includes a processor which processes the inputs 46, 49, 51, 53 from the various sensing means 45, 48, 50, 52 in order to produce control signals 58 to one or more electrically operated hydraulic control valves of a valve block 60.

In the example illustrated in the drawings, a single valve block 60 includes at least four such control valves, hydraulic fluid under pressure being delivered via a hydraulic pump 62 to the valve block 60 from a reservoir, excess and return fluid being returned to the reservoir by a return line 64.

A first control valve of the block 60 operates the actuator 18 which acts to raise and lower the boom 16 about axis A, whilst a second control valve of the block 60 operates the "push-pull" actuators 19a, 19b to move the boom 16 about the upright axis B. A third control valve of the 60 operates the actuator 22 between the boom 16 and dipper arm 20, relatively to pivot the boom 16 and dipper arm 20 about axis C. A fourth control valve of the block 60 operates the actuator 28 which moves the bucket 25 about axis D.

Preferably the control valves are proportional so that depending on the inputs 46, 49, 51, 53 the actuators 18, 19a and 19b, 22 and 28, are fed with a proportional amount of pressurised hydraulic fluid so that the boom 16, dipper arm 20 and bucket 25 movements mimic movements of the first and second control links 32, 36 and the control member 42 in extent and direction.

Where one or more of the inputs 46, 49, 51 and 53 includes information relating to the velocity of movement of the control links 32, 36 and the control member 42, the controller 60 may calculate control signals 58 appropriate to obtain a corresponding speed of operation of the respective actuators 18, 22, 28.

As will be appreciated from figure 1, desirably the base 31 of the control links assembly 27 etc. is mounted on or is part of the operator's seat 14 i.e. the armrest, so that an operator 13 may rest his arm (particularly his elbow) on the armrest and manipulate the control links 32, 36 whilst grasping the handle 40, using small forearm and wrist movements. The control member 42 can be manipulated by the operator's hand or fingers when desired.

Utilising the control apparatus of the present invention an operator requires considerably less skill and training properly to operate the working arm 15 than control arrangements which utilise individual control levers for each of the control valves for the actuators 18, 19a and 19b, 22 and 28. Moreover because the geometry of the control links 32, 36 so closely mimics the geometry of the working arm 15 to be controlled, the invention provides for truly analogue control. Whereas the axes A' and B' at the first joint 33 at the connection of the first control link 32 to the base 31 of the control link assembly 27 are coincident and the corresponding axes A and B where the working arm 15 is connected to the body 11 of the machine 10 are displaced, this makes little practical difference to the intuitive control of the working arm 15 the present invention provides.

Various modifications may be made without departing from the scope of the invention. For example, the working arm 15 may be of an alternative configuration having more than two relatively pivotal arm members 16, 20 in which case there may be a corresponding number of control links 32, 36 and sensing devices to provide inputs to the controller 55.

The working arm 15 of the machine 10 may not be pivoted relative to the body 11 about upright axis B, but the body 11 may include an upper superstructure pivotal about an upright axis relative to a lower, ground engaging, superstructure, in which case the geometry of the control link assembly 27 would need to mimic the geometry of the alternative machine.

In the present example the working arm 15 to be controlled includes linear double acting hydraulic actuators 18, 19a and 19b, 22 and 28 but at least one or more of these may be replaced with an alternative kind of actuator. Particularly, movement of the working arm 15 about the upright axis B could be achieved with a single actuator, or by a hydraulic motor, or even an electrical motor, in which case the controller would be arranged to provide appropriate control signals 58.

Where the bucket 25 or other working implement includes functional features which may be operated e.g. by fluid or other actuator, the control apparatus 27 may include additional control members, for example on the manually graspable part 39 or elsewhere, to provide for operation and control of such functions.

Sensing devices other than encoders 45, 48, 50, 52 may be utilised to sense movements at the joints 33, 37, and to provide inputs 46, 48, 49, 51, 53 to the controller 55, relating to the amount of, direction and if desired velocity of movement of the control links 32, 26 relative to the base 31 and to each other.

Where the sensors are encoders 45, 48, 50, 52 these may be rotary encoders, or linear encoders; examples of other sensing devices are optical, magnetic or the like proximity sensors, Hall effect sensors, or even electromechanical sensors, or any mixture of these.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A control apparatus for controlling a working arm (15) of a machine (10), the arm (15) including a plurality of relatively pivotal arm members (16, 20), a first (16) of the arm members, towards one end thereof, being pivotal, relative to a body (11) of the machine (10) about a first generally horizontal axis (A) by actuator means (18), and relative to the body (11) of the machine (10) about a generally upright axis (B) by actuator means (19a, 19b), and towards the other end of the first arm member (16), the first arm member (16) being pivoted to the second arm member (20) towards one end of the second arm member (20) about a second generally horizontal axis (C) with actuator means (22) between the first and second arm members (16, 20) to effect relative pivoting, the control apparatus including a base (31), a first control link (32) pivoted towards one end thereof to the base (31) at a first joint (33) which permits pivoting movement of the first link (32) about a first generally horizontal axis (A'), and the first link (32) being pivotal relative to the base (31) about a generally upright axis (B'), and pivoting movement towards a second end thereof to a second control link (36) at a second joint (37) for movement about a second generally horizontal axis (C') whereby the geometry of the control apparatus mimics the geometry of the working arm (15) to be controlled, and the second control link (32) including a manually graspable part (39) towards a second end thereof whereby the control links (32, 36) may be manually moved relative to each other and to the base (31) about the first and second generally horizontal axes (A', C') and about the upright axis (B'), and each of the first and second joints (33, 37) including respective sensing means (45, 48, 50) to sense movement of the first control link (32) relative to the base (31) at the first joint (33), and relative movement of the first (32) and second (36) control links at the second joint (37), and to sense pivotal movement of the first control link (32) relative to the base (31) about the generally upright axis (B'), the sensing means providing respective inputs (46, 49, 51, 53 to a controller (55) which operates the respective actuator means (18, 19a & 19b, 22, 28) to pivot the arm members (16, 20) of the working arm (15) relative to each other and to the body (11) of the machine (10), in response to and corresponding to control link (32, 36) movements, wherein towards the outermost end of the second working arm member (20) a working implement (25) is provided which is movable relative to the second arm member (20) about a third generally horizontal axis (D) by actuator means (28), and the manually graspable part (39) of the control apparatus includes a rotatable control member (42) with there being sensing means (52) to sense control member (42) movements, to provide a further input to the controller (55) which operates the actuator means (28) in response to and corresponding to control member (42) movements, and the base (31) is mounted on or is part of an arm rest (44) of an operator's seat (14) with the first joint (33) being positioned towards a back of the seat (14) with the control links (32, 36) extending forwardly, so that control link (32, 36) movements may be effected by operator forearm and/or wrist movements.

2. A control apparatus according to claim 1 wherein the control member (42) is rotatable about a third generally horizontal axis (D').

3. A control apparatus according to claim 1 wherein the movable control member (42) on the manually graspable part (39) of the apparatus, is operable by an operator's finger or hand.

4. A control apparatus according to any one of the preceding claims wherein the first arm member (16) of the working arm (15) extends upwardly and outwardly of its pivotal connection to the body (11) of the machine, and the second working arm member (20) extends downwardly from the first end thereof towards the ground, the first control link (32) extending upwardly from the first joint, and the second control link (36) extending downwardly from the second joint, so that the second joint is above the base, and the manually graspable part.

5. A control apparatus for controlling a working arm (15) of a machine (10), the arm (15) including a plurality of relatively pivotal arm members (16, 20), a first (16) of the arm members, towards one end thereof, being pivotal, relative to a body (11) of the machine (10) about a first generally horizontal axis (A) by actuator means (18), and towards the other end of the first arm member (16), the first arm member (16) being pivoted to the second arm member (20) towards one end of the second arm member (20) about a second generally horizontal axis (C) with actuator means (22) between the first (16) and second (20) arm members to effect relative pivoting, the control apparatus including a base (31), a first control link (32) pivoted towards one end thereof to the base (31) at a first joint (33) which permits pivoting movement of the first link (32) about a first generally horizontal axis (A'), and the first control link (32) being pivoted towards a second end thereof to a second control link (36) at a second joint for movement about a second generally horizontal axis (C'), and the second control link (36) including a manually graspable part (39) towards a second end thereof whereby the control links (32, 36) may be manually moved relative to each other and to the base (31) about the first (A') and second (C') generally horizontal axes, and each of the first and second joints including respective sensing means (45, 48, 50) to sense movement of the first control link (32) relative to the base (31) at the first joint (33), and relative movement of the first (32) and second (36) control links at the second joint (37), the sensing means providing respective inputs (46, 49, 51, 53) to a controller (55) which operates the respective actuator means (18, 19a & 19b, 22, 28) to pivot the arm members (16, 20) of the working arm (15) relative to each other and to the body (11) of the machine (10), in response to and corresponding to control link movements, the first control link (32) extending upwardly from the first joint, and the second control link (36) extending downwardly from the second joint, so that the second joint is above the base (31) and the manually graspable part (39) whereby the geometry of the control apparatus mimics the geometry of the working arm (15) to be controlled, wherein towards the outermost end of the second working arm member (20) a working implement (25) is provided which is movable relative to the second arm member, about a third generally horizontal axis (D) by actuator means (28), and the manually graspable part (39) of the control apparatus includes a rotatable control member (42) with there being sensing means (52) to sense control member (42) movements to provide a further input to the controller (55) which operates the actuator means (28) in response to and corresponding to control member (42) movements, and the base (31) is mounted in or is part of an arm rest of an operator's seat (14) with the first joint (33) being positioned towards a back of the seat (14) with the control links (32, 36) extending forwardly, so that control link (32, 36) movements may be effected by operator forearm and/or wrist movements.

6. A control apparatus according to claim 5 wherein the control member (42) is rotatable about a third generally horizontal axis (D').

7. A control apparatus according to claim 5 wherein the movable control member (42) on the manually graspable part of the apparatus, is operable by an operator's finger or hand.

8. A control apparatus according to any one of the preceding claims wherein the actuator means (18, 19a & 19b, 22, 28) are fluid operated via control valves (60), the controller (55) including a processing means which, from the inputs (46, 49, 51, 53) from the sensing means, provides control signals (58) to the control valves (60) to achieve actuator (18, 19a & 19b, 22, 28) operation which results in working arm (15) movements corresponding to manual movements of the control apparatus links (32, 36) and control member where provided.

9. A machine (10) having a working arm (15) including a plurality of relatively pivotal arm members (16, 20), a first (16) of the arm members, towards one end thereof, being pivotal, relative to a body (11) of the machine (10) about a first generally horizontal axis (A) by actuator means (18), and towards the other end of the first arm member (16), the first arm member (16) being pivoted to the second arm member (20) towards one end of the second arm member (20) about a second generally horizontal axis (C) with actuator means (22) between the first (16) and second (20) arm members to effect relative pivoting, the outermost end of the second arm member (20) being provided with a working implement (25) which is movable relative to the second arm member (20) about a third generally horizontal axis (D) by actuator means (28), and the machine including a control apparatus including a base (31), the base (31) being mounted on or part of an arm rest (44) of an operator's seat (14), a first control link (32) pivoted towards one end thereof to the base (31) at a first joint which permits pivoting movement of the first link about a first generally horizontal axis (A' ), and pivoting movement relative to the base (31) about a generally upright axis (B'), and the first control link (32) being pivoted towards a second end thereof to a second control link (36) at a second pivotal joint for movement about a second generally horizontal axis (C'), the first joint (33) being positioned towards a back of the seat (14) with the control links (32, 36) extending forwardly, whereby the geometry of the control apparatus mimics the geometry of the working arm (15) to be controlled, and the second control link (36) including a manually graspable part (39) towards a second end thereof whereby the control links (32, 36) may be manually moved relative to each other and to the base (31) about the first (A') and second (C') generally horizontal axes and about the upright axis (B'), the manually graspable part (39) of the control apparatus including a rotatable control member (42), and each of the first and second joints including respective sensing means to sense movement of the first control link (32) relative to the base (31) at the first joint, and relative movement of the first (32) and second (36) control links at the second joint, and to sense pivotal movement of the first control link (32) relative to the base (31) about the generally upright axis (B'), and there being sensing means (52) to sense control member (42) movements, the sensing means (45, 48, 50, 52) providing respective inputs (46, 49, 51, 53) to a controller (55) which operates the respective actuator means (18, 19a & 19b, 22, 28) to pivot the arm members (16, 20) and the working implement (25) of the working arm (15) relative to each other and to the body (11) of the machine (10), in response to and corresponding to control link movements.

10. A machine (10) having a working arm (15), the arm (15) including a plurality of relatively pivotal arm members (16, 20), a first (16) of the arm members, towards one end thereof, being pivotal, relative to a body (11) of the machine (10) about a first generally horizontal axis (A) by actuator means (18), and towards the other end of the first arm member (16), the first arm member (16) being pivoted to the second arm member (20) towards one end of the second arm member (20) about a second generally horizontal axis (C) with actuator means (22) between the first (16) and second (20) arm members to effect relative pivoting, the outermost end of the second arm member (20) being provided with a working implement (25) which is movable relative to the second arm member (20) about a third generally horizontal axis (D) by actuator means (28), and the machine (10) including a control apparatus including a base (31), the base (31) being mounted on or part of an arm rest (44) of an operator's seat (14), a first control link (32) pivoted towards one end thereof to the base (31) at a first joint which permits pivoting movement of the first link (32) about a first generally horizontal axis (A'), and the first control link (32) being pivoted towards a second end thereof to a second control link (36) at a second joint for movement about a second generally horizontal axis (C'), the first joint (33) being positioned towards a back of the seat (14) with the control links (32, 36) extending forwardly, and the second control link (36) including a manually graspable part (39) towards a second end thereof whereby the control links (32, 36) may be manually moved relative to each other and to the base (31) about the first (A') and second (C') generally horizontal axes, the manually graspable part (39) of the control apparatus including a rotatable control member (42), and each of the first and second joints including respective sensing means to sense movement of the first control link (32) relative to the base (31) at the first joint, and relative movement of the first (32) and second (36) control links at the second joint, and there being sensing means (52) to sense control member (42) movements, the sensing means (45, 48, 50, 52) providing respective inputs (46, 49, 51, 53) to a controller (55) which operates the first (18), second (19a, 19b), third (22) and fourth (28) actuator means to pivot the arm members (16, 20) and the working implement (25) of the working arm (15) relative to each other and to the body (11) of the machine (10), in response to and corresponding to control link (32, 36) movements, the first control link (32) extending upwardly from the first joint, and the second control link (36) extending downwardly from the second joint, so that the second joint is above the base (31) and the manually graspable part (39) whereby the geometry of the control apparatus mimics the geometry of the working arm (15) to be controlled.
